# DEMANDE DE BREVET EUROPEEN

(11) **EP 0 850 686 A1**
(43) Date de publication de la demande: **01.07.1998**
(21) Numéro de dépôt: 97403126.2
(22) Date de dépôt: 23.12.1997
(51) Int. Cl.: B01J 8/00, B01D 53/04, B01J 19/00

(54) **Réacteur isolé thermiquement**

(30) Priorité: 24.12.1996 FR 9615971
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Lehman, Jean-Yves, 94700 Maisons Alfort (FR); Gourbier, Jean-Pierre, 94420 Le Plessis Trevise (FR)
(74) Mandataire: Le Moenner, Gabriel

(57) **Abrégé**

L'invention concerne un réacteur (1) isolé thermiquement et destiné au traitement d'un gaz par le passage de gaz à travers un lit (15) d'un matériau actif, du type comprenant une virole (5) cylindrique et muni de moyens (21) d'isolation thermique comportant une paroi (25), notamment parallèle à la virole (5), qui délimite avec la virole (5) une lame de gaz (27), ladite paroi (25) et par conséquent ladite lame de gaz (27) étant disposées à l'intérieur de la virole (5), entre celle-ci et un lit (15) d'un matériau actif agencé à l'intérieur de la virole (5). La lame (27) de gaz est en communication avec une partie du réacteur (1) comportant le gaz à traiter et/ou avec une partie du réacteur (1) comportant le gaz traité. Le réacteur (1) comporte en outre des moyens (43) de blocage de tout écoulement de gaz à travers la lame (27) de gaz pour séparer le gaz à traiter du gaz traité.

Application aux adsorbeurs destinés à épurer l'air envoyé aux installations de distillation d'air.

## Description

L'invention est relative à un réacteur isolé thermiquement du type comprenant une virole cylindrique et muni de moyens d'isolation thermique, et plus particulièrement à un adsorbeur pour épurer l'air envoyé aux installations de distillation d'air.

Les installations de distillation d'air comportent généralement des adsorbeurs afin de soumettre l'air comprimé à l'entrée de l'installation, à un traitement de dessiccation et de décarbonatation avant que celui-ci soit refroidi puis introduit dans la colonne de distillation proprement dite. A cet effet, l'air à traiter s'écoule sous une pression typiquement d'environ 5 bars absolus à travers un lit d'un adsorbant disposé dans l'adsorbeur. Une fois que la capacité d'adsorption du lit est épuisée, on régénère l'adsorbant au moyen d'un gaz sec et décarbonaté. Ce gaz peut être un gaz résiduaire récupéré de la colonne de distillation et injecté dans l'adsorbeur en sens inverse. Pour augmenter l'efficacité de la régénération, on chauffe ce gaz résiduaire à une température élevée d'environ 200°C. Ce type d'adsorbeur, dans lequel l'adsorbant est soumis à des variations cycliques de température, est connu sous le nom d"'adsorbeur TSA" (Temperature Swing Adsorption).

L'échauffement du gaz ainsi que de l'adsorbant représente une part importante de l'énergie consommée par l'installation de distillation. Afin de minimiser cette consommation, il est donc nécessaire de réduire les échanges thermiques entre l'adsorbeur et son environnement.

On connaît des isolations thermiques constituées d'un habillage extérieur des parois de l'adsorbeur. Ce type d'isolation s'avère très efficace pour l'ensemble de l'adsorbeur mais présente certains inconvénients lorsque l'adsorbeur est soumis de façon cyclique à des variations de température. En effet, les parois des adsorbeurs étant généralement en métal, celles-ci constituent, en fonction de la phase du cycle, un réservoir ou un puits de chaleur tendant à retarder l'obtention d'un régime stationnaire après un changement de température. En phase de régénération, les parois absorbent une partie de la chaleur amenée par le gaz chauffé et retardent ainsi l'échauffement de l'adsorbant, notamment dans des régions proches des parois. En phase d'adsorption, elles restituent cette chaleur, ce qui diminue l'efficacité d'adsorption de l'adsorbant. Les parois agissent donc sur les cycles à contre-temps et diminuent considérablement l'efficacité de l'adsorbeur.

On pourrait agir contre ce phénomène en augmentant la taille des adsorbeurs et en réduisant par conséquent, à écoulement constant, la fréquence des cycles. Mais les récents développements des installations de distillation ont conduit à une réduction de la taille des adsorbeurs afin de réduire la quantité d'adsorbant et le coût d'un adsorbeur. Du fait que la quantité d'adsorbant est réduite, la fréquence des cycles se trouve considérablement augmentée.

Afin d'améliorer l'efficacité des adsorbeurs connus, on connaît des adsorbeurs équipés d'une isolation thermique interne. Une telle isolation thermique interne doit répondre à des exigences particulières :
- elle ne doit pas permettre de by-pass de gaz entre la paroi de l'adsorbeur et le lit d'adsorbant, afin que le gaz à traiter et le gaz traité soient toujours séparés,
- elle doit résister aux compressions et décompressions répétées imposées par le cycle de fonctionnement et pouvant atteindre des variations de pression d'une dizaine de bars,
- elle doit facilement permettre l'épreuve hydraulique périodique, en général exigée par les autorités des pays d'exploitation.

On connaît du document US-A-3 925 041 un adsorbeur TSA équipé d'une isolation thermique interne. Cet adsorbeur comprend une virole cylindrique orientée verticalement et dont les extrémités sont fermées par des parties ellipsoïdales formant respectivement un dôme et un fond. Un lit d'adsorbant est disposé dans la virole cylindrique.

Au niveau du lit d'adsorbant, l'isolation thermique interne est réalisée par des plaques d'un isolant rigide, appliquées bout à bout contre la virole et comprimant contre cette virole une couche d'un matériau fibreux et isolant. Cette isolation thermique est donc disposée entre la virole et le lit d'adsorbant. Afin de prévenir lors du fonctionnement un by-pass des gaz à travers cette isolation, des feuilles métalliques sont appliquées contre la virole tout en recouvrant les côtés des plaques afin de dévier l'écoulement de gaz en direction du lit d'adsorbant.

En outre, un isolant fibreux est appliqué au moyen de boulons contre les parties internes du dôme et du fond de l'adsorbeur.

Bien que cette isolation thermique interne augmente considérablement l'efficacité d'un adsorbeur, elle n'est pas adaptée à subir une épreuve hydraulique. En effet, après une telle épreuve, l'isolation thermique est mouillée et inefficace. Il faut donc la soumettre à un séchage long et difficile, et par conséquent très coûteux. Par ailleurs, l'installation des plaques et des feuilles métalliques au niveau du lit d'adsorbant s'avère difficile et long, de sorte que seuls des spécialistes sont à même de poser cette isolation sur les parois internes de l'adsorbeur. Cette isolation connue augmente alors considérablement le coût de fabrication de l'adsorbeur.

L'invention vise à résoudre ces divers problèmes en proposant une isolation thermique de l'adsorbeur qui réponde aux exigences précitées et qui soit facile et économique à installer.

A cet effet, l'invention a pour objet un réacteur isolé thermiquement, et destiné au traitement d'un gaz par le passage de gaz à travers un lit d'un matériau actif, du type comprenant une virole cylindrique et muni de moyens d'isolation thermique, les moyens d'isolation thermique comportant une paroi , notamment parallèle à la virole, qui délimite avec la virole une lame de gaz, ladite paroi et par conséquent ladite lame de gaz étant disposées à l'intérieur de la virole, entre celle-ci et un lit d'un matériau actif agencé à l'intérieur de la virole, caractérisé en ce que la lame de gaz est en communication avec une partie du réacteur comportant le gaz à traiter et/ou avec une partie du réacteur comportant le gaz traité, et en ce qu'il comporte des moyens de blocage de tout écoulement de gaz à travers la lame de gaz pour séparer le gaz à traiter du gaz traité.

Le réacteur selon l'invention peut comporter une ou plusieurs des caractéristiques suivantes :
- les moyens de blocage comportent au moins une paroi de séparation installée entre ladite paroi et la virole,
- le réacteur comprend des moyens de diminution de la convection naturelle dans la lame de gaz,
- les moyens de diminution de la convection naturelle dans la lame de gaz comprennent une feuille, notamment une tôle, disposée entre ladite paroi et la virole dans la lame de gaz pour obtenir une double lame de gaz,
- la feuille est centrée par rapport à ladite paroi et à la virole,
- les écartements entre la feuille et la paroi ainsi qu'entre la feuille et la virole sont compris entre 10 et 40mm, de préférence égaux à 20mm,
- le réacteur comprend des éléments, notamment ponctuels ou linéaires, formant entretoises d'une part entre la paroi et la feuille, et d'autre part entre la feuille et la virole,
- les éléments formant entretoises entre la paroi et la feuille sont décalés par rapport aux éléments formant entretoises entre la feuille et la virole,
- les éléments formant des entretoises sont des portions en creux et en relief réalisées de préférence par gaufrage dans la feuille, ces portions en creux et en relief présentant notamment des extrémités pointues,
- les portions en creux et en relief de la feuille s'étendent parallèlement à l'axe de la virole sur toute la dimension de la feuille qui est parallèle à cet axe, et présentent une section transversale de forme sensiblement triangulaire,
- les portions en creux et en relief alternent sur chaque face de la feuille,
- dans le cas d'un réacteur comportant une virole qui se prolonge en une partie formant dôme, le réacteur comporte au moins une, de préférence deux couches d'un feutre de fibres appliquées contre l'intérieur du dôme,
- pour un réacteur destiné notamment à fonctionner sous une pression variable, le feutre de fibres comporte des fibres céramiques et présente un rapport entre la résistivité fluidique et le module d'élasticité de Young inférieur à 1 s/m².
- la ou chaque couche de feutre possède une épaisseur comprise entre 20 et 30mm, de préférence égale à 25mm environ,
- les couches de feutre sont fixées contre l'intérieur du dôme au moyen de dispositifs de fixation démontables,
- les dispositifs de fixation démontables comprennent des tiges solidaires du dôme et destinées à transpercer les couches de feutre, et des rondelles de maintien du feutre contre le dôme coopérant, notamment par encliquetage, avec les tiges,
- le réacteur est constitué par un adsorbeur, notamment pour l'épuration d'air envoyé à une installation de distillation d'air, le matériau actif étant un adsorbant.

D'autres caractéristiques et avantages de l'invention ressortiront de la description suivante, donnée à titre d'exemple, sans caractère limitatif en regard des dessins annexés sur lesquels :
La figure 1 est une vue en coupe selon la ligne I-I de la figure 2 d'un réacteur selon l'invention;
La figure 2 est une vue en coupe selon la ligne ll-ll du réacteur de la figure 1; et
La figure 3 est une vue agrandie d'un détail III de la figure 1.

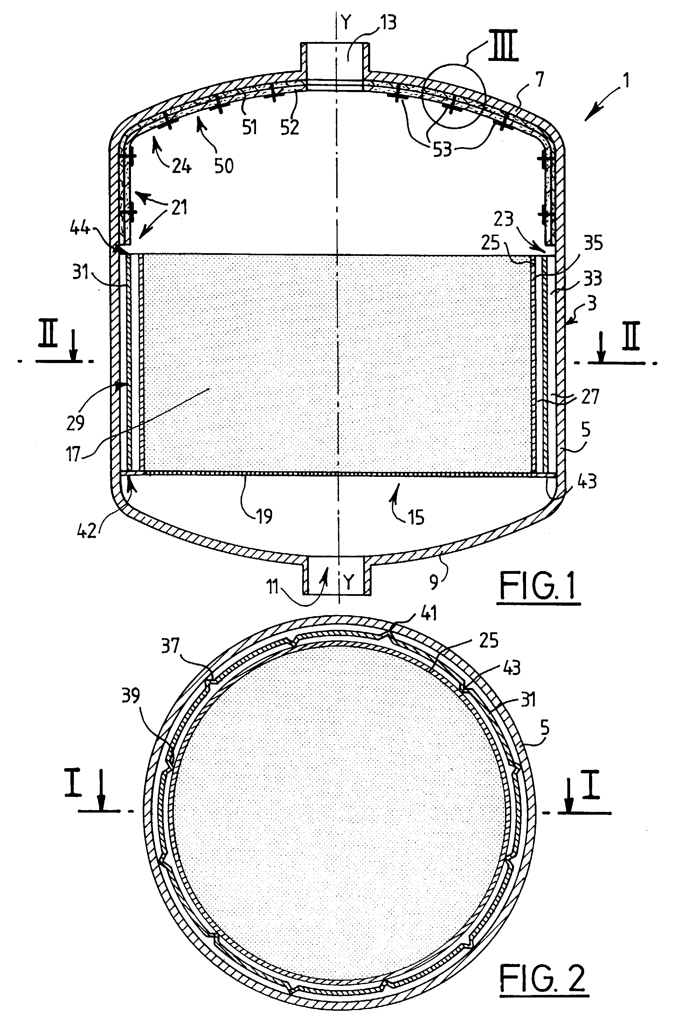

Sur la figure 1 est représenté un réacteur 1 selon l'invention. Dans cet exemple de réalisation, le réacteur 1 est un adsorbeur pour la dessication- décarbonatation d'air atmosphérique destiné à une installation de distillation d'air.

L'adsorbeur 1 comprend un récipient 3 de forme générale cylindrique et orienté selon un axe vertical Y-Y. Le récipient 3 est formé d'une virole cylindrique 5 qui se prolonge vers le haut par une partie formant dôme 7 et vers le bas par une partie formant fond 9. Le dôme 7 et le fond 9 présentent chacun une forme ellipsoïdale ou sphérique. Les éléments 5, 7 et 9 sont en acier.

A son extrémité inférieure, le fond 9 comporte une ouverture centrale 11 servant d'ouverture d'admission d'un gaz à traiter lors de la période d'adsorption et qui sert d'ouverture de sortie lors de la période de régénération.

A son extrémité supérieure, le dôme 7 comporte une ouverture centrale 13 qui sert d'ouverture de sortie d'un gaz traité lors de la période d'adsorption et qui sert d'ouverture d'admission d'un gaz chauffé lors de la période de régénération.

A l'intérieur de la virole 5 est installé un lit d'adsorbant 15. Ce lit 15 comprend un adsorbant 17 reposant sur un support 19 tel que par exemple une grille, permettant le passage d'un gaz à travers l'adsorbant 17. Typiquement, le lit d'adsorbant 15 présente une hauteur comprise entre 1m et 1,5m et selon la charge d'air à traiter, un diamètre compris entre 0,5m et 5m.

Afin de diminuer la consommation d'énergie de l'adsorbeur 1 lors des cycles de fonctionnement, ce dernier est équipé de moyens 21 d'isolation thermique interne.

Ces moyens 21 comprennent une première isolation thermique 23 disposée entre l'adsorbant 17 et la virole 5, et une seconde isolation thermique 24 appliquée contre l'intérieur du dôme 7.

Le moyen 23 comprend une paroi 25 cylindrique et parallèle à la virole 5 et fixée sur le support 19. Cette paroi 25 délimite une lame de gaz 27 entre la virole 5 et la paroi 25. Un moyen 29 de diminution de la convection naturelle est disposé dans la lame de gaz 27 afin de réduire l'échange thermique entre la virole 5 et l'adsorbant 17.

Dans l'exemple de réalisation, le moyen 29 comprend une feuille 31, notamment une tôle, d'une épaisseur d'environ 0,5mm qui est disposée entre la paroi 25 et la virole 5. Cette feuille 31 présente une forme cylindrique et est, de préférence, centrée par rapport à la paroi 25 et à la virole 5 pour obtenir une double lame de gaz 33, 35. Les écartements entre la feuille 31 et la paroi 25 ainsi qu'entre la feuille 31 et la virole 5 sont compris entre 10 et 40mm, et de préférence égaux à 20mm.

Comme on le voit sur la figure 2, le réacteur comprend des éléments 37 et 39 formant des entretoises d'une part entre la paroi 25 et la feuille 31 et d'autre part entre la feuille 31 et la virole 5, pour maintenir la feuille 31 en position.

Avantageusement, les éléments 37 et 39 formant des entretoises sont des nervures extérieures et intérieures réalisées de préférence par gaufrage dans la feuille 31. Les nervures extérieures 37 et intérieures 39 s'étendent parallèlement à l'axe de la virole 5 sur toute l'étendue de la feuille 31 qui est parallèle à cet axe vertical Y-Y.

Les nervures 37 sont décalées par rapport aux nervures 39 et plus précisément alternent avec ces dernières. Cette disposition des entretoises allonge le chemin de transfert de la chaleur par conduction entre la virole 5 et l'adsorbant 17 et réduit donc l'échange thermique entre eux.

Pour diminuer encore plus le transfert de chaleur entre la virole 5 et l'adsorbant 17, on réduit la surface de contact virole-feuille et feuille-paroi. A cet effet, les nervures 37 et 39 présentent chacune une section transversale de forme sensiblement triangulaire avec des extrémités pointues 41 et 43. Ces extrémités 41 et 43 s'appuient respectivement contre la virole 5 et contre la paroi 25.

Ainsi qu'on voit sur la figure 1, l'extrémité inférieure 42 de la lame de gaz 27 est fermée par une paroi annulaire de séparation 43 qui entoure la grille 19. Cette paroi 43 empêche tout by-pass de gaz, de sorte que le gaz entrant soit par l'ouverture 11, soit par l'ouverture 13 doit obligatoirement passer par le lit d'adsorbant 15 lors du fonctionnement.

Par contre, l'extrémité supérieure 44 de la lame de gaz 27 est ouverte afin de permettre un équilibrage de la pression régnant dans la lame de gaz avec celle de la partie supérieure de l'adsorbeur 1.

La seconde isolation thermique interne 24 est réalisée par au moins une, de préférence deux couches 51, 52 d'un feutre 50 de fibres céramiques, appliquées contre l'intérieur du dôme 7. L'épaisseur de chaque couche est comprise entre 20 et 30mm, de préférence égale à 25mm.

Afin de résister aux compressions et décompressions répétées imposées par le cycle de fonctionnement de l'adsorbeur, la Demanderesse a trouvé un feutre qui répond aux exigences du cycle de fonctionnement d'un adsorbeur. Ce feutre 50 présente une résistivité fluidique d'environ 60000 Pa s/m². La résistivité fluidique est définie par le rapport entre d'une part une perte de charge ΔP induite par un feutre de surface et d'épaisseur unitaires dans un écoulement de gaz à pression atmosphérique et d'autre part un débit de ce même gaz traversant le feutre. De plus, ce feutre 50 possède un module d'élasticité de Young E supérieur à 4 10⁶ Pa, procurant au feutre 50 une bonne tenue mécanique. La demanderesse a constaté qu'un feutre qui présente un rapport entre la résistivité fluidique et le module d'élasticité de Young inférieur à 1 s/m² est particulièrement adapté pour l'application dans des adsorbeurs TSA et permet de réduire de façon considérable le nombre des points de fixations du feutre contre la paroi du dôme sans que la tenue mécanique du feutre soit affectée.

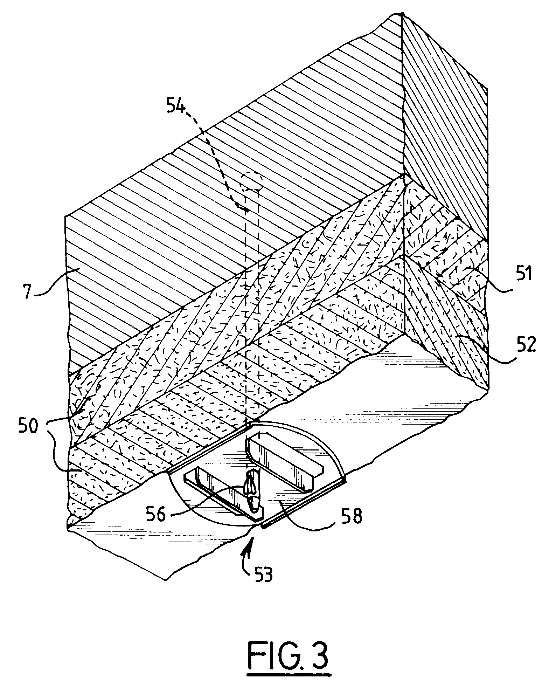

Le feutre 50 est fixé contre l'intérieur du dôme 7 à l'aide de dispositifs 53 de fixation démontables qui sont représentés en détail sur la figure 3. Chaque dispositif de fixation démontable comporte une tige 54 soudée au dôme 7 et sensiblement perpendiculaire à sa paroi. La tige 54 transperce les deux couches 51 et 52 de feutre 50 et comporte des saillies 56 qui coopèrent par encliquetage avec une rondelle 58 de maintien du feutre contre le dôme 7.

Par la suite, on va décrire le fonctionnement d'un réacteur selon l'invention dans le cas où celui-ci est un adsorbeur tel qu'indiqué plus haut.

### Phase d'adsorption :

Lors du cycle d'adsorption, l'air à traiter entre par l'ouverture 11 dans l'adsorbeur 1. L'air contenant encore de l'eau et du dioxyde de carbone traverse le lit d'adsorbeur 15 et subit une dessiccation et une décarbonatation avant de sortir épuré par l'ouverture 13. Un by-pass du gaz à traiter à travers la lame de gaz est empêché par la paroi de séparation 43 fermant l'extrémité inférieure de la lame de gaz 27. Cette phase d'adsorption s'effectue généralement à une pression élevée, par exemple 5 bars absolus.

### Phase de régénération :

Au moment du changement du régime haute pression vers le régime à pression atmosphérique pour la régénération, le gaz qui s'est accumulé dans le feutre 50 et entre celui-ci et la partie de dôme 7 va s'écouler facilement vers l'intérieur du réacteur 1 grâce à la faible résistivité du feutre 50. Celui-ci ne va donc se soulever que peu et retrouvera aisément sa forme initiale grâce au module d'élasticité choisi.

Lors de la régénération de l'adsorbant 17, on injecte dans l'adsorbeur 1 par l'ouverture 13 de l'azote impur sec et décarbonaté, d'une pression d'environ 1 bar absolu qui est chauffé à environ 200°C.

Du fait que le gaz chaud entre dans la double lame de gaz 33 et 35, l'efficacité de l'isolation thermique de cette double lame est encore accrue à cause de la densité plus faible du gaz chauffé. La présence de la feuille 31 réduit l'établissement d'un écoulement par convection naturelle, de sorte que l'échange thermique entre la virole 5 et l'adsorbant 17 est faible.

La Demanderesse a constaté qu'il est seulement nécessaire d'isoler thermiquement le dôme 7 et l'adsorbant 17. C'est pourquoi le fond 9 de l'adsorbeur 1 n'est pas équipé d'une isolation thermique ce qui permet de réduire encore plus le coût de l'adsorbeur.

### Epreuve hydraulique :

Lors d'une épreuve hydraulique, on retire facilement le feutre 50 grâce aux dispositifs de fixation démontables 53. Après l'épreuve, il suffit de reposer une ou deux nouvelles couches de feutre 50, ce qui est peu coûteux et peut être effectué même par des personnes non spécialisées.

## Revendications

1. Réacteur (1) isolé thermiquement et destiné au traitement d'un gaz par le passage de gaz à travers un lit (15) d'un matériau actif, du type comprenant une virole (5) cylindrique et muni de moyens (21) d'isolation thermique, les moyens (21) d'isolation thermique comportant une paroi (25), notamment parallèle à la virole (5), qui délimite avec la virole une lame de gaz (27), ladite paroi (25) et par conséquent ladite lame de gaz (27) étant disposées à l'intérieur de la virole (5), entre celle-ci et un lit (15) d'un matériau actif agencé à l'intérieur de la virole (5), caractérisé en ce que la lame (27) de gaz est en communication avec une partie du réacteur (1) comportant le gaz à traiter et/ou avec une partie du réacteur comportant le gaz traité, et en ce qu'il comporte des moyens (43) de blocage de tout écoulement de gaz à travers la lame de gaz pour séparer le gaz à traiter du gaz traité.

2. Réacteur selon la revendication 1, caractérisé en ce que les moyens de blocage comportent au moins une paroi (43) de séparation installée entre ladite paroi (25) et la virole (5).

3. Réacteur selon la revendication 1 ou 2, caractérisé en ce qu'il comprend des moyens (29) de diminution de la convection naturelle dans la lame de gaz (27).

4. Réacteur selon la revendication 3, caractérisé en ce que les moyens (29) de diminution de la convection naturelle dans la lame de gaz comprennent une feuille (31), notamment une tôle, disposée entre ladite paroi (25) et la virole (5) dans la lame de gaz (27) pour obtenir une double lame (33, 35) de gaz.

5. Réacteur selon la revendication 4, caractérisé en ce que la feuille (31) est centrée par rapport à ladite paroi (25) et à la virole (5).

6. Réacteur selon la revendication 4 ou 5, caractérisé en ce que les écartements entre la feuille (31) et la paroi (25) ainsi qu'entre la feuille (31) et la virole (5) sont compris entre 10 et 40mm, de préférence égaux à 20mm.

7. Réacteur selon l'une quelconque des revendications 4 à 6, caractérisé en ce qu'il comprend des éléments (37, 39), notamment ponctuels ou linéaires, formant entretoises d'une part entre la paroi (25) et la feuille (31), et d'autre part entre la feuille (31) et la virole (5).

8. Réacteur selon la revendication 7, caractérisé en ce que les éléments (39) formant entretoises entre la paroi (25) et la feuille (31) sont décalés par rapport aux éléments (37) formant entretoises entre la feuille (25) et la virole (5).

9. Réacteur selon la revendication 7 ou 8, caractérisé en ce que les éléments (37, 39) formant des entretoises sont des portions en creux et en relief réalisées de préférence par gaufrage dans la feuille (31), ces portions en creux (39) et en relief (37) présentant notamment des extrémités pointues.

10. Réacteur selon la revendication 9, caractérisé en ce que les portions en creux (39) et en relief (37) de la feuille (31) s'étendent parallèlement à l'axe (Y-Y) de la virole (5) sur toute la dimension de la feuille (31) qui est parallèle à cet axe, et présentent une section transversale de forme sensiblement triangulaire.

11. Réacteur selon la revendication 9 ou 10, caractérisé en ce que les portions en creux (39) et en relief (37) alternent sur chaque face de la feuille (31).

12. Réacteur selon l'une quelconque des revendications 1 à 11, dans lequel la virole (5) se prolonge en une partie formant dôme (7), caractérisé en ce qu'il comporte au moins une, de préférence deux couches (51, 52) d'un feutre (50) de fibres appliquées contre l'intérieur du dôme (7).

13. Réacteur selon la revendication 12, notamment destiné à fonctionner sous une pression variable, caractérisé en ce que le feutre (50) de fibres comporte des fibres céramiques et présente un rapport entre la résistivité fluidique et le module d'élasticité de Young inférieur à 1 s/m².

14. Réacteur selon la revendication 12 ou 13, caractérisé en ce que la ou chaque couche (51, 52) de feutre (50) possède une épaisseur comprise entre 20 et 30mm, de préférence égale à 25mm environ.

15. Réacteur selon l'une quelconque des revendications 12 à 14, caractérisé en ce que les couches de feutre (50) sont fixées contre l'intérieur du dôme (7) au moyen de dispositifs (53) de fixation démontables.

16. Réacteur selon la revendication 15, caractérisé en ce que les dispositifs (53) de fixation démontables comprennent des tiges (54) solidaires du dôme (7) et destinées à transpercer les couches de feutre (50), et des rondelles (58) de maintien du feutre contre le dôme coopérant, notamment par encliquetage, avec les tiges (54).

17. Réacteur selon l'une quelconque des revendications 1 à 16, constitué par un adsorbeur (1), notamment pour l'épuration d'air envoyé à une installation de distillation d'air, le matériau actif étant un adsorbant.
